# EUROPEAN PATENT SPECIFICATION

(11) **EP 0 910 036 B1**
(45) Date of publication and mention of the grant of the patent: **31.05.2006**
(21) Application number: 98308289.2
(22) Date of filing: 13.10.1998
(51) Int. Cl.: G06K 15/00

(54) **Printer data rasterization printer**
Printer zur Aufrasterung von Druckerdaten
Imprimante de tramage de données d'imprimante

(30) Priority: 17.10.1997 JP 28494397
(43) Date of publication of application: 21.04.1999
(73) Proprietor: SEIKO EPSON CORPORATION, Shinjuku-ku, Tokyo (JP)
(72) Inventor: Suzuki, Tetsuya, c/o SEIKO EPSON CORPORATION, Suwa-shi, Nagano (JP)
(74) Representative: Sturt, Clifford Mark

(56) References cited:
- EP-A- 0 801 357
- US-A- 4 254 467

## Description

### BACKGROUND OF INVENTION

The present invention relates to a printer, a printer driver for giving printing data to the printer, and a printing system including the same.

In a typical printing system, a printer is connected to a host computer, and a program called a printer driver to operate the printer is installed in the host computer. The printer driver installed in the host computer converts data of a document to be printed into printing data, the type of which can be understood by the printer, and the thus obtained printing data is sent to the printer by an operating system. The printer interprets the printing data and develops a raster image on a memory, that is, image development is conducted, and then the raster image is printed on a sheet of printing paper.

There are provided several types of printing data sent to the printer. One of them is an intermediate code. In the intermediate code, image elements on a page such as characters, figures and photographs are individually formed into raster images, that is, image elements on a page are formed into a list. After the printer has received printing data of an intermediate code type from the host computer, an intermediate code (printer intermediate code) suitable for the processing conducted in the printer is generated from the thus received intermediate code and registered in the memory. Then, image development is conducted by the printer intermediate code, so that printing can be executed. In this connection, in order to enhance the memory efficiency, the printer usually analyzes the received printing data and divides one page into a plurality of bands, and generates a printer intermediate code for each band and conducts image development.

Printing data of the intermediate code type sent from the host computer to the printer is divided into a page unit, however, the printing data is not divided into a band unit. Therefore, the printer receives all intermediate codes of one page from the host computer, and the thus received intermediate codes are converted into printer intermediate codes and stored in the memory. After that, image development is conducted by the band unit.

As described above, after all intermediate codes on one page have been registered in the memory, the printer starts developing a raster image in the conventional system. Therefore, image development can not be started in a period of time from the start of sending the printing data by the host computer to the end of registering all intermediate codes on the first page. In accordance with that, the start of printing is delayed and the throughput is lowered.

European Patent Publication No. 0801357 discloses a method of dividing the document data of one page which is to be printed into a plurality of bands. The data is then transmitted to a printer, on a band basis, to be printed. This prior art is achnowledged in the preamble of claim 1.

### SUMMARY OF INVENTION

It is an object of the present invention to provide a printer in which image development can be started immediately after the start of sending the printing data to the printer.

A printer of the present invention comprises: receiving means for receiving from a host computer an intermediate code of a physical band which is one of the physical bands divided from each page of a document to be printed, wherein in the intermediate code, image elements are individually rasterized and formed into a list; band end detecting means for detecting a band end code which indicates an end of the physical band from the received intermediate code; image developing means for developing an image of a small band which is given by dividing the physical band by an integer, in accordance with the intermediate code, which has already been received, immediately after the detection of the end of each physical band; and a printing engine for conducting printing in accordance with the developed image of the small band. According to this printer, an end of each band is detected by the received intermediate code, and when the end of the band is detected, image development of the band is started. Consequently, when the sending of printing data of the type of the intermediate code is started, the intermediate code of the first one band is registered in the printer. At this time, image development is started.

It is possible for the printer to conduct image development by a band which is smaller than the band of the intermediate code made by the printer driver. In this case, it is preferable that a size of the band of the intermediate code made by the printer driver is given by integral multiples of the size of the band, the image development of which is conducted by the printer.

The printing system of the present invention is provided with a printer driver and the above printer, the printer driver divides each page of a document to be printed into a plurality of bands, generates an intermediate code of each band and adds information expressing an end of each band to the generated intermediate code.

Typically, the printer of the present invention is executed when a microcomputer provided in the printer is programmed so that the above function can be exhibited. It is possible to execute the printer driver of the present invention when the host computer capable of communicating with the printer is programmed so that the above function of the printer driver can be exhibited. The necessary program can be installed or loaded into an objective computer via various mediums such as a semiconductor memory, disk type storage and communicating line.

The intermediate code having the above specific structure, which is generated by the printer driver of the present invention, can be supplied to the printer via various mediums such as a semiconductor memory, disk type storage and communicating line. When the intermediate code is supplied to the printer, the printer can start printing at a time which is only a little delayed form the start of supply.

### BRIEF DESCRIPTION OF THE DRAWINGS

Fig. 1 is a block diagram showing a construction of a printing system of an embodiment of the present invention;
Fig. 2 is a block diagram showing a construction of an intermediate code block received by a printer;
Fig. 3 is a flowchart showing processing of a printer;
Fig. 4 is a block diagram showing a construction of an intermediate printer code registered in a printer;
Fig. 5 is a block diagram showing a location of a printer driver in a host computer;
Fig. 6 is a view showing an example of a page;
Fig. 7 is a view showing an example of division of a band;
Fig. 8 is a flowchart showing a motion of a printer driver; and
Fig. 9 is a flowchart showing another motion of a printer driver.

### DETAILED DESCRIPTION OF PREFERRED EMBODIMENTS

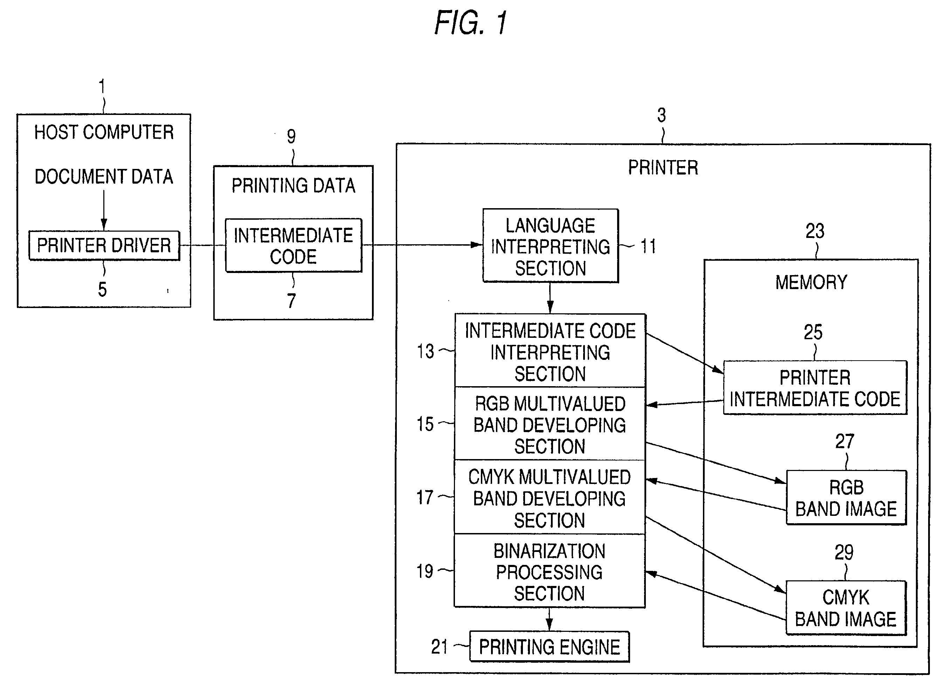

Fig. 1 is a view showing a printing system of an embodiment of the present invention.

The printer 3 is connected to a host computer 1. The host computer 1 has a printer driver 5. The printer driver 5 divides each page of data of a document to be printed into a plurality of bands, converts into an intermediate code 7 for each band, changes the intermediate code 7 into printing data 9 of a predetermined printer control language, and sends the data to a spool (not shown) in the host computer. Then, the printing data 9 is sent to the printer 3 by an operating system (not shown) of the host computer 1.

A microcomputer is incorporate into the printer 3. This microcomputer functions as a language interpreting section 11, intermediate code interpreting section 13, RGB multivalued band developing section 15, CMYK multivalued band developing section 17, and binarization processing section 19. The printer 3 has a printing engine 21. The language interpreting section 11 delivers an intermediate code 7 contained in the received printing data 9 to the intermediate code interpreting section 13. The intermediate code interpreting section 13 converts the intermediate code 7 into a printer intermediate code 25 suitable for processing in the printer 3, and registers it in a memory 23 of the microcomputer.

RGB multivalued band developing section 15 develops the printer intermediate code 25 into a multigradation raster image (RGB multivalued band image) 27 of RGB expression at each band and registers it in the memory 23. CMYK multivalued band developing section 15 converts RGB multivalued band image 27 of each band into a multigradation raster image 29 of CMYK expression and registers it in the memory 23. The binarization processing section 19 generates a binary signal, which expresses whether or not a CMYK ink dot is hit at each dot position, from CMYK multigradation raster image 29 and sends it to a printing engine 21. The printing engine 21 prints a document image on a sheet of paper in accordance with the binary signal.

In general, after the printing engine has been set in motion, it continues printing at a constant printing speed hereinafter. Therefore, the image development processing conducted by the band developing sections 15, 17 must not be delayed with respect to this speed. Accordingly, if the processing speed of the band developing sections 15, 17 is sufficiently high, the printing engine 21 may start printing at a point of time when image development of the first one band has been completed. However, in order to keep the printing operation to be safe, the printing engine 21 may start printing after image development of predetermined plural bands or image development of one page has been completed. In the latter case, in order to save the memory 23, it is preferable that the developed raster image is compressed and stored. Time to start printing, at which the printing engine 21 is started after the image development of bands has been completed, may be controlled in accordance with the type of a document to be printed, for example, whether color or monochrome, whether a natural image such as a photograph is contained or the image is composed of only a text and figure, whether or not the resolution is high, and whether or not the page size is large.

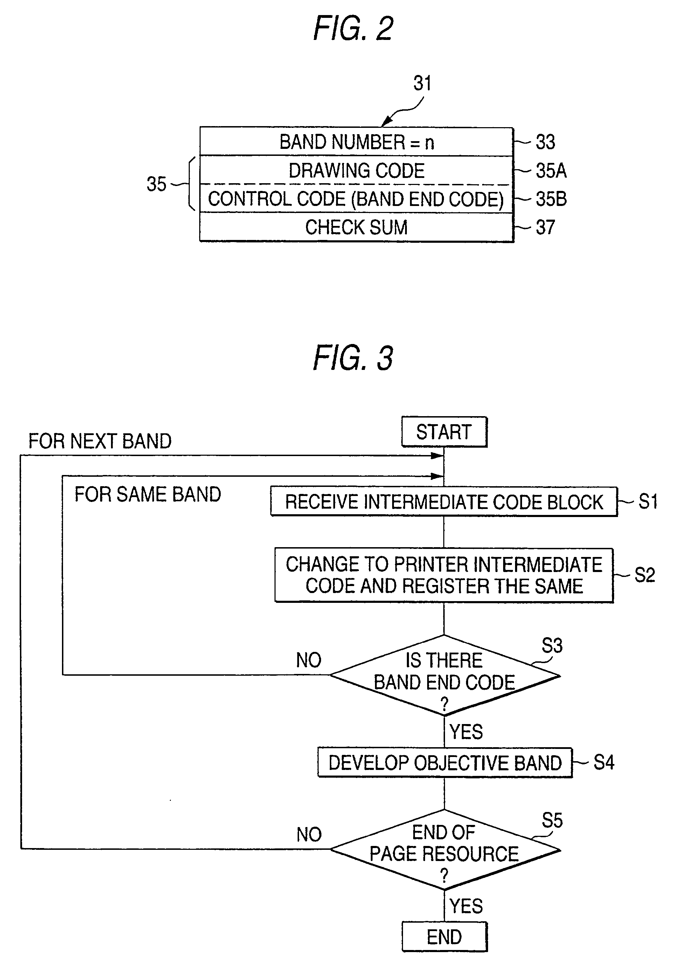

The printer driver 5 in the host computer 1 operates as follows. When the document data is converted into an intermediate code 7, a content of each page of the document data is analyzed, and a region on each page is divided into a plurality of physical bands. Then, an intermediate code of each physical band is made and incorporated into an intermediate code block 31, the structure of which is shown in Fig. 2. In some cases, an intermediate code of one physical band is accommodated in one intermediate code block 31, however, in other cases, an intermediate code of one physical band is divided into a plurality of intermediate code blocks 31 and accommodated. Especially, in the case of color printing, in order to enhance the memory efficiency, a size of the intermediate code block 31 is made smaller than a normal data size of one band. Therefore, it is common that one physical band becomes a plurality of intermediate code blocks 31. The intermediate code 7 sent to the printer 3 is a row of a series of intermediate code blocks 31. The intermediate code blocks 31 are necessarily sent to the printer 3 in the order of numbers of the physical bands. No intermediate code blocks 31 are sent to the printer 3 out of the order of numbers of the physical bands. Further, the intermediate code blocks 31 in the same physical band are sent in the successive order. No intermediate code blocks 31 of different physical bands are inserted into the intermediate code blocks 31 of the same physical band.

As shown in Fig. 2, one intermediate code block 31 includes a number 33 of the physical band, a group of several intermediate codes 35, and a check sum. A content of the intermediate codes 35 can be classified into a drawing code 35A and a control code 35B. The printer driver 5 puts a code of band end, which is a control code, at the final intermediate code block 31 of each band. Therefore, the printer 3 can realize an end of each band by detecting the band control code.

Fig. 3 is a flowchart of processing conducted by the intermediate code analyzing section 13 and RGB multivalued band developing section 15 of the printer 3 which has received a row of the above intermediate code block 31.

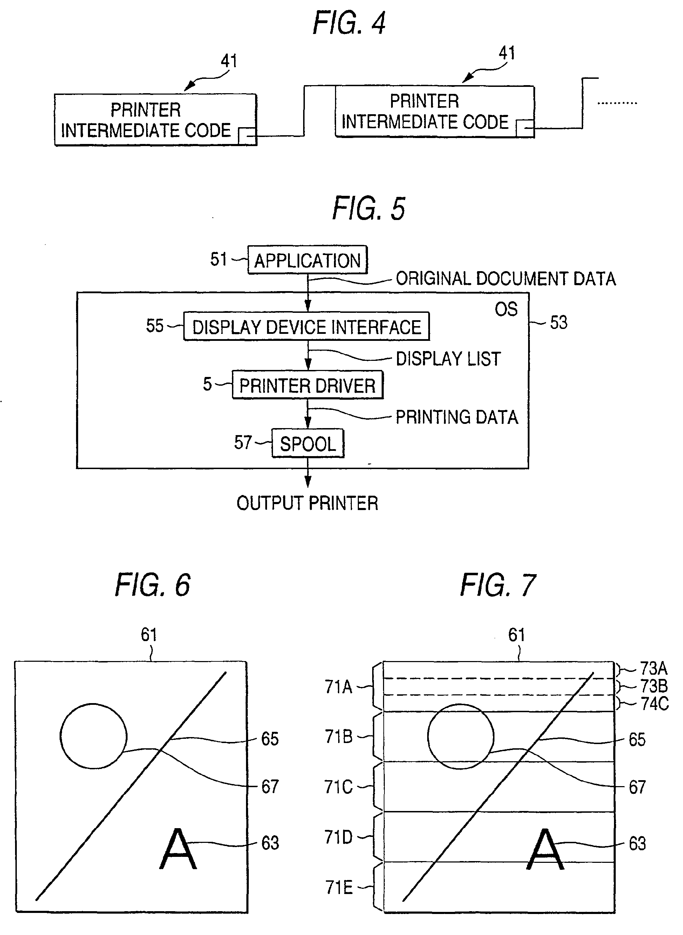

When the intermediate code analyzing section 13 receives the intermediate code block 31 (step S1), the intermediate code 35 in the block 31 is converted into the printer intermediate code 25 and registered in the memory (step S2). At this time, the intermediate code analyzing section 13 changes the printer intermediate code into a type of the intermediate code block 41 of a predetermined size. This intermediate code block 41 is linked with the intermediate code block 41 of the same physical band number which has already been registered. In this way, this intermediate code block 41 is registered. The intermediate code analyzing section 13 checks whether or not the received intermediate code block 31 contains a band end code (step S3). Until the band end code is detected, the above intermediate code registering motion is repeated for the same band. Accordingly, the printer intermediate code 25 of one physical band is registered in the memory 23 in the form of a list of a plurality of intermediate code blocks 41 which are linked as shown in Fig. 4. Of course, the printer intermediate code 25 of one physical band is registered in the memory 23 in the form of a single intermediate code block 41.

When the band end code is detected, RGB multivalued band developing section 15 starts image development processing for the printer intermediate code of the same physical band registered in the memory 23 (step S4). Accordingly, waiting time from the start of receiving the printing data by the printer 3 to the start of image development is only a period of time in which the intermediate code of the first physical band is registered. Successively after the band development conducted by RGB multivalued band developing section 15, processing is respectively conducted by CMYK multivalued band developing section 19, binarization processing section 19 and printing engine 21.

While RGB multivalued band developing section 15 is conducting image development of the band which has already been registered, the intermediate code interpreting section 13 receives the intermediate code block 1 of the next band (step S1). This intermediate code block 1 is converted into the printer intermediate code and registered (step S2). In this way, the registration of the intermediate code of each band and the image development of the band which has registered before are conducted in parallel with each other. When the received page resource is completed, processing of the page concerned is completed, and the same processing is started for the next page.

The printer driver 5 incorporated into the host computer 1 will be explained in more detail as follows.

Fig. 5 is a view showing a location of the printer driver 5 in the host computer 1.

Original document data, which has been made by the application program 51, is first converted into a list of image drawing command, which is called a display list, by the display device interface 55 of the operating system 51. The printer driver 5 reads in this display list and converts it into printing data of a type of the intermediate code for each band described before. Then the data is written in a spool 57. The printing data in the spool 57 is transmitted to the printer 3 by the operating system 53.

In this connection, a case is supposed in which document data of one page containing elements 63, 65, 67 as shown in Fig. 6 is made by the application program 51. In this making process, first, a letter "A", the reference numeral of which is 63, is written, and then an oblique line 65 is drawn, and finally a circle 67 is drawn. In this case, the original document data and the display list are sent in the order of the letter 63, oblique line 65 and circle 67 which are the order when they are made.

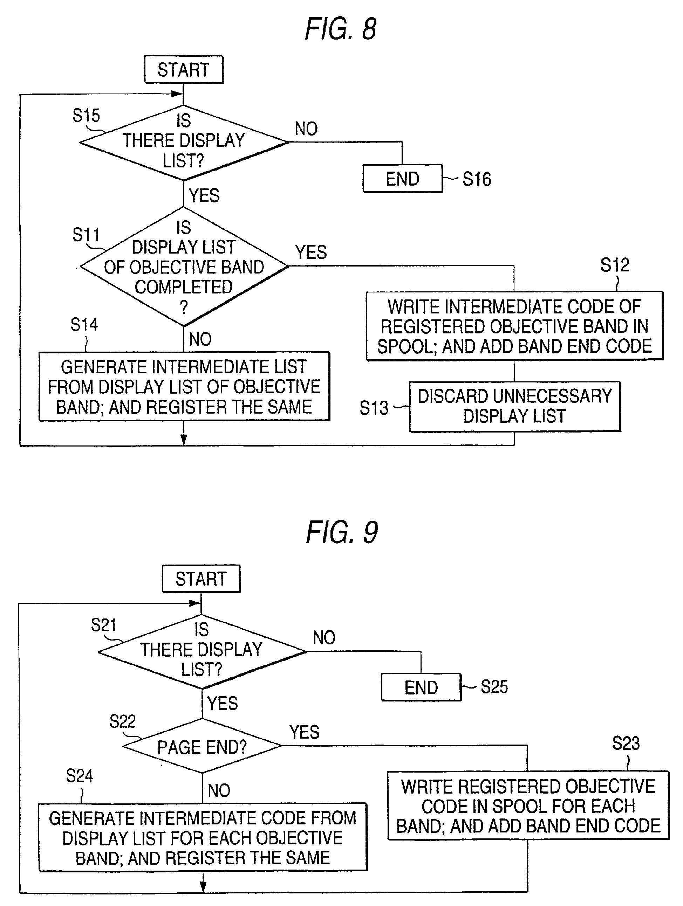

The printer driver 5 conducts processing as follows. First, as shown in Fig. 7, the printer driver 5 defines a plurality of bands 71A to 71E on the page 61 with respect to a display list of one page sent in the order of making the letter 63, oblique line 65 and circle 67. Then, the objective band is successively designated from the band 71A, which is located at an uppermost position, to the band located at a lower position, and then processing shown in the flowchart of Fig. 8 is conducted. In this connection, sizes of the bands 71A to 71E defined by the printer driver 5 are given by the integral multiples of the physical bands into which the page is divided by the firmware of the printer 3. Usually, the integral multiples are several times or at least one time.

As shown in Fig. 8, first, the printer driver 5 finds a drawing command of the element belonging to the objective band from the display list (step S11). According to it, the intermediate code of the objective band is made and registered in the memory in the host computer 1 (step S14). The above operation is conducted for all drawing commands belonging to the objective band. For example, when the objective band is the second band 71B shown in Fig. 7, first, in accordance with the drawing command of the oblique line 65, an intermediate code of a portion of the oblique line 65 belonging to the objective band 71B is made according to the drawing command of the oblique line 65, and then an intermediate code of a portion of the circle 67 belonging to the objective band 71B is made according to the drawing command of the circle 67.

After intermediate codes of all elements belonging to one objective band have been registered (YES in step S1), the registered intermediate codes of the objective band are written in the spool 57 (step S12). At this time, a band end code is added to the last intermediate code. Next, the unnecessary display list is discarded (step S13). For example, if the registered intermediate code of the objective band has been written in the spool 57 with respect to the third band shown in Fig. 7, the drawing command of the circle 67 becomes unnecessary. Therefore, it is discarded.

When processing of one objective band is completed, the next band is designated as the objective band, and the above processing is repeated. The above processing is repeated for all on the display list (step S10). After the above processing has been repeated for all on the display list, processing of the printer driver 5 is completed (step S15).

Fig. 9 is a flowchart of another processing which can be conducted by the printer driver 5. This processing can be conducted instead of the processing shown in Fig. 8.

By the same method as that explained in Fig. 8, the printer driver 5 makes and registers an intermediate code of the objective band (step S24). This motion is conducted on all bands while the bands 71A to 71E on the page are successively being designated as the objective bands. In this case, the order in which the objective bands are designated is not necessarily the same as the arrangement of the bands. Due to the foregoing, the intermediate codes of all bands on one page are registered. After that (YES in step S22), the registered intermediate codes of one page are written in the spool for each band. At this time, a bend end code is added to the last of the intermediate code of each band (step S23).

Processing described in Fig. 8 is advantageous in that the intermediate code can be generated by the memory of one band. On the other hand, the processing shown in Fig. 9 requires a memory of one page, however, the processing shown in Fig. 9 is advantageous in that the intermediate code can be made in the order of the bands which are different from the order of the arrangement of the bands on the page. In this connection, even in the processing shown in Fig. 8, if it is composed that the printer 3 accumulates the band image of one page and then the accumulated band image is sent to the printing engine 21, no problems are caused even when the printer driver 5 makes the intermediate codes in the order which is different from the arrangement of the bands and the thus made intermediate codes are sent to the printer 3.

The embodiment of the present invention is explained above, however, it should be noted that the present invention is not limited to the above specific embodiment, but it possible to apply the present invention in various forms. For example, the present invention can be applied to not only color printing but also monochrome printing. Band development processing conducted in the printer is not limited to the specific embodiment described above, but it is possible to provide various types of variations. The host computer and the printer 3 are connected to each other via net work. The device to give printing data to the printer 3 is not necessarily the computer 1 having a function for generating printing data. The device to give printing data to the printer 3 may be a buffer device or printer server which relays printing data.

## Claims

1. A printer (3) comprising:
receiving means for receiving from a host computer an intermediate code of a physical band which is one of the physical bands divided from each page of a document to be printed, wherein in the intermediate code, image elements are individually rasterized and formed into a list;
band end detecting means (13) for detecting a band end code which indicates an end of the physical band from the received intermediate code; **characterized by**
image developing means (15, 17, 19) for developing an image of a small band which is given by dividing the physical band by an integer, in accordance with the intermediate code, which has already been received, immediately after the detection of the end of each physical band; and
a printing engine (21) for conducting printing in accordance with the developed image of the small band.

2. The printer according to claim 1, further comprising:
means (13) for converting an intermediate code of each received band into a printer intermediate code appropriate to be processed in the printer, and for registering the printer intermediate code in a memory (23) of the printer, wherein the image developing means (15, 17, 19) develops an image of each band, which has already been registered in the memory (23), in response to the detection of the end of each band.

3. The printer according to claim 1, wherein the image developing means (15, 17, 19) accumulates images of bands of one page and then the accumulated images are provided to the printing engine.

4. A printing system comprising a printer driver (5) and the printer (3) according to claim 1, wherein the printer driver (5) divides each page of a document to be printed into a plurality of bands, generates an intermediate code of each band and adds information expressing an end of each band to the generated intermediate code.

5. The printing system according to claim 4, further comprising a host computer (1), connected to the printer (3) and wherein the host computer (1) is provided with the printer driver (5).

6. A recording medium capable of being read by a micro computer in a printer, holding a computer program so that the computer functions as the band end detecting means (13) and the image developing means (15,17,19) of claim 1.

## Patentansprüche

1. Drucker (3), umfassend:
ein Empfangsmittel zum Empfangen eines Zwischenkodes eines physischen Bandes von einem Hostcomputer, das eines der physischen Bänder ist, in die jede Seite eines zu druckenden Dokuments geteilt ist, wobei in dem Zwischenkode Bildelemente einzeln gerastert und zu einer Liste gebildet sind;
ein Band-Ende-Detektionsmittel (13) zum Detektieren eines Band-Ende-Kodes, der ein Ende des physischen Bandes angibt, von dem empfangenen Zwischenkode; **gekennzeichnet durch**
ein Bildentwicklungsmittel (15, 17, 19) zum Entwickeln eines Bildes eines kleinen Bandes, das durch Teilen des physischen Bandes **durch** eine ganze Zahl erhalten wird, gemäß dem Zwischenkode, der bereits empfangen wurde, unmittelbar nach dem Detektieren des Endes jedes physischen Bandes; und
eine Druckmaschine (21) zum Ausführen eines Drucks gemäß dem entwickelten Bild des kleinen Bandes.

2. Drucker gemäß Anspruch 1, des Weiteren umfassend:
ein Mittel (13) zum Konvertieren eines Zwischenkodes jedes empfangenen Bandes in einen Druckerzwischenkode, der für die Verarbeitung in dem Drucker geeignet ist, und zum Registrieren des Druckerzwischenkodes in einem Speicher (23) des Druckers, wobei das Bildentwicklungsmittel (15, 17, 19) als Reaktion auf die Detektion des Endes jedes Bandes ein Bild jedes Bandes entwickelt, das bereits in dem Speicher (23) registriert ist.

3. Drucker gemäß Anspruch 1, wobei das Bildentwicklungsmittel (15, 17, 19) Bilder von Bändern einer Seite ansammelt und die angesammelten Bilder dann der Druckmaschine bereitgestellt werden.

4. Drucksystem, umfassend einen Druckertreiber (5) und den Drucker (3) gemäß Anspruch 1, wobei der Druckertreiber (5) jede Seite eines zu druckenden Dokuments in mehrere Bänder teilt, einen Zwischenkode von jedem Band erstellt und Informationen, die ein Ende jedes Bandes ausdrücken, zu dem erstellten Zwischenkode hinzufügt.

5. Drucksystem gemäß Anspruch 4, des Weiteren umfassend einen Hostcomputer (1), der an den Drucker (3) angeschlossen ist, wobei der Hostcomputer (1) mit dem Druckertreiber (5) bereitgestellt ist.

6. Aufzeichnungsmedium, das von einem Mikrocomputer in einem Drucker gelesen werden kann, das ein Computerprogramm enthält, so dass der Computer als Band-Ende-Detektionsmittel (13) und als Bildentwicklungsmittel (15, 17, 19) von Anspruch 1 dient.

## Revendications

1. Imprimante (3) comprenant :
un moyen de réception pour recevoir depuis un ordinateur hôte un code intermédiaire d'une bande physique qui est l'une des bandes physiques qui sont divisées à partir de chaque page d'un document destiné à être imprimé, dans laquelle, dans le code intermédiaire, des éléments d'image sont tramés de façon individuelle et sont formés selon une liste ;
un moyen de détection d'extrémité de bande (13) pour détecter un code d'extrémité de bande qui indique une extrémité de la bande physique à partir du code intermédiaire reçu,
**caractérisée par** :
un moyen de développement d'image (15, 17, 19) pour développer une image d'une petite bande qui est donnée en divisant la bande physique par un entier, conformément au code intermédiaire, comme déjà reçu, immédiatement après la détection de l'extrémité de chaque bande physique ; et
un moteur d'impression (21) pour mettre en oeuvre une impression conformément à l'image développée de la petite bande.

2. Imprimante selon la revendication 1, comprenant en outre :
un moyen (13) pour convertir un code intermédiaire de chaque bande reçue selon un code intermédiaire d'imprimante approprié pour un traitement dans l'imprimante et pour enregistrer le code intermédiaire d'imprimante dans une mémoire (23) de l'imprimante, dans lequel le moyen de développement d'image (15, 17, 19) développe une image de chaque bande, qui a déjà été enregistrée dans la mémoire (23), en réponse à la détection de l'extrémité de chaque bande.

3. Imprimante selon la revendication 1, dans laquelle le moyen de développement d'image (15, 17, 19) accumule des images de bandes d'une page puis les images accumulées sont appliquées sur le moteur d'impression.

4. Système d'impression comprenant un dispositif de pilotage d'imprimante (5) et l'imprimante (3) selon la revendication 1, dans lequel le dispositif de pilotage d'imprimante (5) divise chaque page d'un document destiné à être imprimé selon une pluralité de bandes, génère un code intermédiaire de chaque bande et additionne une information qui exprime une extrémité de chaque bande au code intermédiaire généré.

5. Système d'impression selon la revendication 4, comprenant en outre un ordinateur hôte (1) qui est connecté à l'imprimante (3) et dans lequel l'ordinateur hôte (1) est muni du dispositif de pilotage d'imprimante (5).

6. Support d'enregistrement pouvant être lu au moyen d'un micro-ordinateur dans une imprimante, contenant un programme d'ordinateur de telle sorte que l'ordinateur fonctionne en tant que moyen de détection d'extrémité de bande (13) et que moyen de développement d'image (15, 17, 19) selon la revendication 1.
